# EUROPEAN PATENT APPLICATION

(11) **EP 3 690 586 A1**
(43) Date of publication of application: **05.08.2020**
(21) Application number: 20152965.8
(22) Date of filing: 21.01.2020
(51) Int. Cl.: G05D 1/00

(54) **METHOD AND DEVICE FOR REMOTE-CONTROLLING AUTONOMOUS VEHICLE CAPABLE OF CHANGING DRIVING MODE BETWEEN AUTONOMOUS DRIVING MODE AND MANUAL DRIVING MODE**

(30) Priority: 30.01.2019 US 201962798556 P; 31.12.2019 US 201916731089
(71) Applicant: Stradvision, Inc., Pohang-si, Gyeongsangbuk-do 37668 (KR)
(72) Inventor: Kim, Kye-Hyeon, Seoul (KR); Kim, Yongjoong, Pohang-si (KR); Kim, Hak-Kyoung, Pohang-si (KR); Nam, Woonhyun, Pohang-si (KR); Boo, SukHoon, Anyang-si (KR); Sung, Myungchul, Pohang-si (KR); Shin, Dongsoo, Suwon-si (KR); Yeo, Donghun, Pohang-si (KR); Ryu, Wooju, Pohang-si (KR); Lee, Myeong-Chun, Pohang-si (KR); Lee, Hyungsoo, Seoul (KR); Jang, Taewoong, Seoul (KR); Jeong, Kyungjoong, Pohangsi (KR); Je, Hongmo, Pohang-si (KR); Cho, Hojin, Pohang-si (KR)
(74) Representative: V.O.

(57) **Abstract**

A method for remotely controlling at least one autonomous vehicle is provided. The method includes steps of: an autonomous driving control device, (a) on condition that the autonomous driving control device detects driving environment by referring to sensor information and allows the autonomous vehicle to travel on an autonomous driving mode or a manual driving mode, determining whether the autonomous driving control device fails to establish a driving plan by using the driving environment and whether the autonomous driving control device fails to change to the manual driving mode by using the driving environment; and (b) if the autonomous driving control device fails to establish the driving plan or fails to change to the manual driving mode, selecting a remote control mode and transmitting request information to a remote control service providing server, to allow a remote driver to control the autonomous vehicle by using a specific remote vehicle.

## Description

The present disclosure relates to a method and a device for remotely controlling at least one autonomous vehicle capable of switching between an autonomous driving mode and a manual driving mode; and more particularly, to the method and the device for at least one remote driver to remotely control the autonomous vehicle by referring to sensor information from the autonomous vehicle.

Autonomous vehicles use various computing systems to aid in transport of passengers from one location to another. Some autonomous vehicles may require some initial input or continuous input from an operator, such as a pilot, driver, or passenger. Other systems, for example, autopilot systems, may be used only when the system has been engaged, which permits the operator to switch from a manual driving mode (where the operator exercises a high degree of control over a movement of the vehicle) to an autonomous driving mode (where the vehicle essentially drives itself).

In particular, U.S. Patent No. 8,818,608 discloses a method of changing the autonomous driving mode to the manual driving mode under certain conditions.

However, in conventional autonomous vehicles, their driving mode is switched between the autonomous driving mode and the manual driving mode according to a driving environment, but a stability of autonomous driving in a specific driving environment deteriorates due to inability to accurately determine whether the driving mode should be changed.

In addition, in the conventional autonomous vehicles, the driver can switch from the autonomous driving mode to the manual driving mode according to the driving environment, however, accidents can happen if the driver fails to respond properly to the driving environment or is not experienced.

Accordingly, the inventors of the present disclosure propose a method for preventing any accidents that may result from a situation where the autonomous driving vehicle cannot easily determine a driving plan or the driver is not experienced.

It is an object of the present disclosure to solve all the aforementioned problems.

It is another object of the present disclosure to actively respond to a driving environment where an autonomous vehicle has a difficulty in determining a driving plan to be used for autonomous driving.

It is still another object of the present disclosure to prevent a traffic accident caused by an inexperienced driver of the autonomous vehicle.

In accordance with one aspect of the present disclosure, there is provided a method for remotely controlling at least one autonomous vehicle, including steps of: (a) on condition that an autonomous driving control device detects driving environment of the autonomous vehicle by referring to sensor information acquired from one or more sensors of the autonomous vehicle and allows the autonomous vehicle to travel on an autonomous driving mode or on a manual driving mode according to the driving environment, the autonomous driving control device performing one of a process of determining whether the autonomous driving control device fails to establish a driving plan by using the driving environment while on the autonomous driving mode and a process of determining whether the autonomous driving control device fails to change from the autonomous driving mode to the manual driving mode by using the driving environment; and (b) the autonomous driving control device, if the autonomous driving control device fails to establish the driving plan while on the autonomous driving mode or fails to change from the autonomous driving mode to the manual driving mode, performing a process of selecting a remote control mode and thus transmitting request information for remote control to a remote control service providing server over wireless communication, to thereby allow a remote driver to remotely control the autonomous vehicle by using a specific remote vehicle corresponding to the remote control service providing server.

As one example, at the step of (b), the autonomous driving control device performs (i) a process of transmitting the request information for the remote control to the remote control service providing server, to thereby allow the remote control service providing server to confirm the specific remote vehicle which is available among pre-registered remote vehicles, (ii) if approval information for the remote control is acquired from the remote control service providing server or the specific remote vehicle, a process of transmitting the sensor information to the specific remote vehicle over the wireless communication, to thereby allow the specific remote vehicle to be synchronized with the autonomous vehicle, and (iii) if at least one remote driving control signal is acquired which is to be used by the remote driver for controlling the specific remote vehicle by referring to the sensor information, a process of allowing the autonomous vehicle to be driven according to the remote driving control signal.

As one example, the autonomous driving control device, while the process of transmitting the sensor information to the specific remote vehicle is performed to make the specific remote vehicle be synchronized with the autonomous vehicle, performs a process of displaying at least one surroundings video image of the autonomous vehicle created from analysis of the sensor information by the autonomous driving control device, such that the surroundings video image is synchronized with at least one display of the specific remote vehicle.

As one example, the autonomous driving control device performs a process of transmitting information on a destination and a driving route of the autonomous vehicle to the specific remote vehicle, to thereby allow the specific remote vehicle to display the information on the destination and the driving route of the autonomous vehicle for the remote driver to be aware of the information on the destination and the driving route.

As one example, the sensor information includes at least part of camera sensor information, LiDAR sensor information, radar sensor information, and ultrasound sensor information, acquired from one or more sensors installed on the autonomous vehicle.

As one example, the autonomous driving control device is determined as failing to establish the driving plan by using the driving environment while on the autonomous driving mode, if the driving environment corresponds to a situation including at least one of (i) a situation where an expected path of the autonomous vehicle collides with that of a vehicle on an opposite side on a crossroad, (ii) a situation where the autonomous vehicle is traveling on a roadway without lane markings, (iii) a situation where the autonomous vehicle must travel in violation of the lane markings, and (iv) a situation where at least one movement of at least one nearby vehicle fails to be estimated due to traffic congestion.

As one example, the autonomous driving control device is determined as failing to change from the autonomous driving mode to the manual driving mode if the driving environment includes a situation where a driver in the autonomous vehicle is unavailable for driving the autonomous vehicle.

As one example, if at least one selection signal, representing a driver in the autonomous vehicle selects the remote control mode, is acquired, the autonomous driving control device performs a process of transmitting the request information for the remote control to the remote control service providing server over the wireless communication, to thereby allow the remote driver to remotely control the autonomous vehicle by using the specific remote vehicle corresponding to the remote control service providing server.

In accordance with another aspect of the present disclosure, there is provided an autonomous driving control device for remotely controlling at least one autonomous vehicle, including: at least one memory that stores instructions; and at least one processor configured to execute the instructions to perform or support another device to perform: (I) on condition that the autonomous driving control device detects driving environment of the autonomous vehicle by referring to sensor information acquired from one or more sensors of the autonomous vehicle and allows the autonomous vehicle to travel on an autonomous driving mode or on a manual driving mode according to the driving environment, one of a process of determining whether the autonomous driving control device fails to establish a driving plan by using the driving environment while on the autonomous driving mode and a process of determining whether the autonomous driving control device fails to change from the autonomous driving mode to the manual driving mode by using the driving environment and (II) if the autonomous driving control device fails to establish the driving plan while on the autonomous driving mode or fails to change from the autonomous driving mode to the manual driving mode, a process of selecting a remote control mode and thus transmitting request information for remote control to a remote control service providing server over wireless communication, to thereby allow a remote driver to remotely control the autonomous vehicle by using a specific remote vehicle corresponding to the remote control service providing server.

As one example, at the process of (II), the processor performs (i) a process of transmitting the request information for the remote control to the remote control service providing server, to thereby allow the remote control service providing server to confirm the specific remote vehicle which is available among pre-registered remote vehicles, (ii) if approval information for the remote control is acquired from the remote control service providing server or the specific remote vehicle, a process of transmitting the sensor information to the specific remote vehicle over the wireless communication, to thereby allow the specific remote vehicle to be synchronized with the autonomous vehicle, and (iii) if at least one remote driving control signal is acquired which is to be used by the remote driver for controlling the specific remote vehicle by referring to the sensor information, a process of allowing the autonomous vehicle to be driven according to the remote driving control signal.

As one example, while the process of transmitting the sensor information to the specific remote vehicle is performed to make the specific remote vehicle be synchronized with the autonomous vehicle, the processor performs a process of displaying at least one surroundings video image of the autonomous vehicle created from analysis of the sensor information by the autonomous driving control device, such that the surroundings video image is synchronized with at least one display of the specific remote vehicle.

As one example, the processor performs a process of transmitting information on a destination and a driving route of the autonomous vehicle to the specific remote vehicle, to thereby allow the specific remote vehicle to display the information on the destination and the driving route of the autonomous vehicle for the remote driver to be aware of the information on the destination and the driving route.

As one example, the sensor information includes at least part of camera sensor information, LiDAR sensor information, radar sensor information, and ultrasound sensor information, acquired from one or more sensors installed on the autonomous vehicle.

As one example, the processor is determined as failing to establish the driving plan by using the driving environment while on the autonomous driving mode, if the driving environment corresponds to a situation including at least one of (i) a situation where an expected path of the autonomous vehicle collides with that of a vehicle on an opposite side on a crossroad, (ii) a situation where the autonomous vehicle is traveling on a roadway without lane markings, (iii) a situation where the autonomous vehicle must travel in violation of the lane markings, and (iv) a situation where at least one movement of at least one nearby vehicle fails to be estimated due to traffic congestion.

As one example, the processor is determined as failing to change from the autonomous driving mode to the manual driving mode if the driving environment includes a situation where a driver in the autonomous vehicle is unavailable for driving the autonomous vehicle.

As one example, if at least one selection signal, representing a driver in the autonomous vehicle selects the remote control mode, is acquired, the processor performs a process of transmitting the request information for the remote control to the remote control service providing server over the wireless communication, to thereby allow the remote driver to remotely control the autonomous vehicle by using the specific remote vehicle corresponding to the remote control service providing server.

In addition, recordable media readable by a computer for storing a computer program to execute the method of the present disclosure is further provided.

The following drawings to be used to explain example embodiments of the present disclosure are only part of example embodiments of the present disclosure and other drawings can be obtained based on the drawings by those skilled in the art of the present disclosure without inventive work.
Fig. 1 is a drawing schematically illustrating an autonomous driving control device for controlling at least one autonomous vehicle capable of switching between an autonomous driving mode and a manual driving mode in accordance with one example embodiment of the present disclosure.
Fig. 2 is a drawing schematically illustrating a method for remotely controlling the autonomous vehicle capable of switching between the autonomous driving mode and the manual driving mode in accordance with one example embodiment of the present disclosure.
Fig. 3 is a drawing schematically illustrating examples of a driving environment where remote control is desirable, in the method for remotely controlling the autonomous vehicle capable of switching between the autonomous driving mode and the manual driving mode in accordance with one example embodiment of the present disclosure.
Fig. 4 is a drawing schematically illustrating a process of a remote driver remotely controlling the autonomous vehicle capable of switching between the autonomous driving mode and the manual driving mode in accordance with one example embodiment of the present disclosure.

Detailed explanation on the present disclosure to be made below refer to attached drawings and diagrams illustrated as specific embodiment examples under which the present disclosure may be implemented to make clear of purposes, technical solutions, and advantages of the present disclosure. These embodiments are described in sufficient detail to enable those skilled in the art to practice the invention.

Besides, in the detailed description and claims of the present disclosure, a term "include" and its variations are not intended to exclude other technical features, additions, components or steps. Other objects, benefits and features of the present disclosure will be revealed to one skilled in the art, partially from the specification and partially from the implementation of the present disclosure. The following examples and drawings will be provided as examples but they are not intended to limit the present disclosure.

Moreover, the present disclosure covers all possible combinations of example embodiments indicated in this specification. It is to be understood that the various embodiments of the present disclosure, although different, are not necessarily mutually exclusive. For example, a particular feature, structure, or characteristic described herein in connection with one embodiment may be implemented within other embodiments without departing from the spirit and scope of the present disclosure. In addition, it is to be understood that the position or arrangement of individual elements within each disclosed embodiment may be modified without departing from the spirit and scope of the present disclosure. The following detailed description is, therefore, not to be taken in a limiting sense, and the scope of the present disclosure is defined only by the appended claims, appropriately interpreted, along with the full range of equivalents to which the claims are entitled. In the drawings, similar reference numerals refer to the same or similar functionality throughout the several aspects.

Any images referred to in the present disclosure may include images related to any roads paved or unpaved, in which case the objects on the roads or near the roads may include vehicles, persons, animals, plants, buildings, flying objects like planes or drones, or any other obstacles which may appear in a road-related scene, but the scope of the present disclosure is not limited thereto. As another example, said any images referred to in the present disclosure may include images not related to any roads, such as images related to alleyway, land lots, sea, lakes, rivers, mountains, forests, deserts, sky, or any indoor space, in which case the objects in said any images may include vehicles, persons, animals, plants, buildings, flying objects like planes or drones, ships, amphibious planes or ships, or any other obstacles which may appear in a scene related to alleyway, land lots, sea, lakes, rivers, mountains, forests, deserts, sky, or any indoor space, but the scope of the present disclosure is not limited thereto.

The headings and abstract of the present disclosure provided herein are for convenience only and do not limit or interpret the scope or meaning of the embodiments.

To allow those skilled in the art to carry out the present disclosure easily, the example embodiments of the present disclosure by referring to attached diagrams will be explained in detail as shown below.

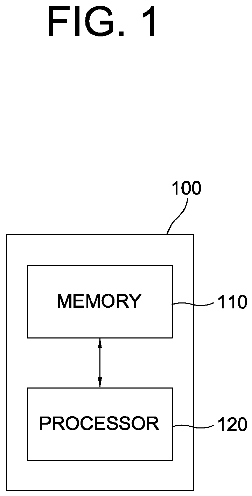

Fig. 1 is a drawing schematically illustrating an autonomous driving control device for controlling at least one autonomous vehicle capable of switching between an autonomous driving mode and a manual driving mode in accordance with one example embodiment of the present disclosure. By referring to Fig. 1, the autonomous driving control device 100 may include a memory 110 for storing instructions to remotely control the autonomous vehicle capable of switching between the autonomous driving mode and the manual driving mode, and a processor 120 for performing processes corresponding to the instructions in the memory 110 to remotely control the autonomous vehicle capable of switching between the autonomous driving mode and the manual driving mode.

Specifically, the autonomous driving control device 100 may typically achieve a desired system performance by using combinations of at least one computing device and at least one computer software, e.g., a computer processor, a memory, a storage, an input device, an output device, or any other conventional computing components, an electronic communication device such as a router or a switch, an electronic information storage system such as a network-attached storage (NAS) device and a storage area network (SAN) as the computing device and any instructions that allow the computing device to function in a specific way as the computer software.

The processor of the computing device may include hardware configuration of MPU (Micro Processing Unit) or CPU (Central Processing Unit), cache memory, data bus, etc. Additionally, the computing device may further include OS and software configuration of applications that achieve specific purposes.

However, such description of the computing device does not exclude an integrated device including any combination of a processor, a memory, a medium, or any other computing components for implementing the present disclosure.

In addition to this, the autonomous driving control device 100 may be a computing device controlling operations of the autonomous vehicle.

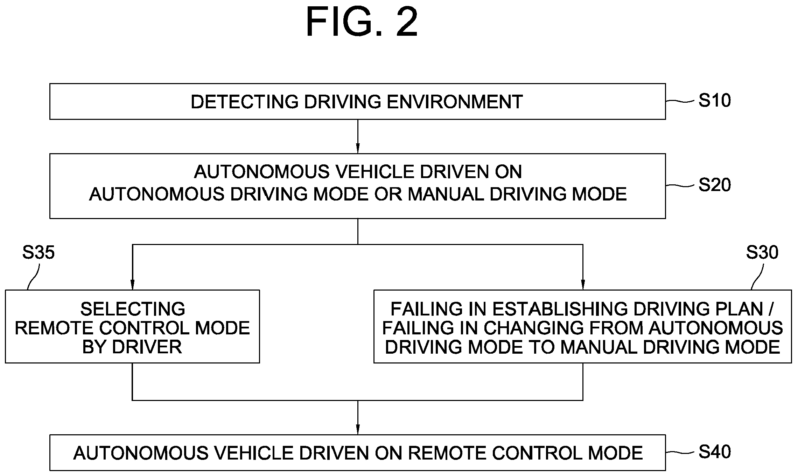

Below is a description, by referring to Fig. 2, of a method for remotely controlling the autonomous vehicle capable of switching between the autonomous driving mode and the manual driving mode by using the autonomous driving control device 100 in accordance with one example embodiment of the present disclosure.

First, if sensor information is acquired from one or more sensors of the autonomous vehicle, the autonomous driving control device 100 may detect a driving environment of the autonomous vehicle by referring to the sensor information, at a step of S10.

Herein, the sensor information may include at least part of camera sensor information, LiDAR sensor information, radar sensor information, ultrasound sensor information, but the scope of the present disclosure is not limited thereto, and may include any sensor information or its processed value acquired from any sensors installed on the autonomous vehicle.

And, the autonomous driving control device 100 may allow the autonomous vehicle to be driven on the autonomous driving mode or on the manual driving mode according to the detected driving environment, at a step of S20.

Herein, while the autonomous vehicle is being autonomously driven according to a driving plan determined by referring to the driving environment, if the detected driving environment corresponds to a situation where autonomous driving is determined as difficult, that is, a situation where the autonomous vehicle may malfunction or crash if kept on the autonomous driving mode, then the autonomous driving control device 100 may switch a driving mode of the autonomous vehicle to the manual driving mode to thereby allow a driver of the autonomous vehicle to manually drive the autonomous vehicle.

As one example, the driving environment where the autonomous vehicle may have a difficulty in the autonomous driving may be, for example, a situation where detection of information required for the autonomous driving is difficult, like traveling in a tunnel, traveling under heavy snow or heavy rain, traveling in low illumination, dust on a camera lens, etc. and may be a dangerous situation like a traffic accident on a road, approach of a speeding vehicle, a nearby vehicle showing abnormal behavior, etc., but the scope of the present disclosure is not limited thereto.

Next, on condition that the autonomous driving control device 100 allows the autonomous vehicle to travel on the autonomous driving mode or on the manual driving mode according to the driving environment, the autonomous driving control device 100 may perform one of a process of determining whether the autonomous driving control device fails to establish the driving plan by using the detected driving environment while on the autonomous driving mode and a process of determining whether the autonomous driving control device fails to change from the autonomous driving mode to the manual driving mode by using the detected driving environment, at a step of S30.

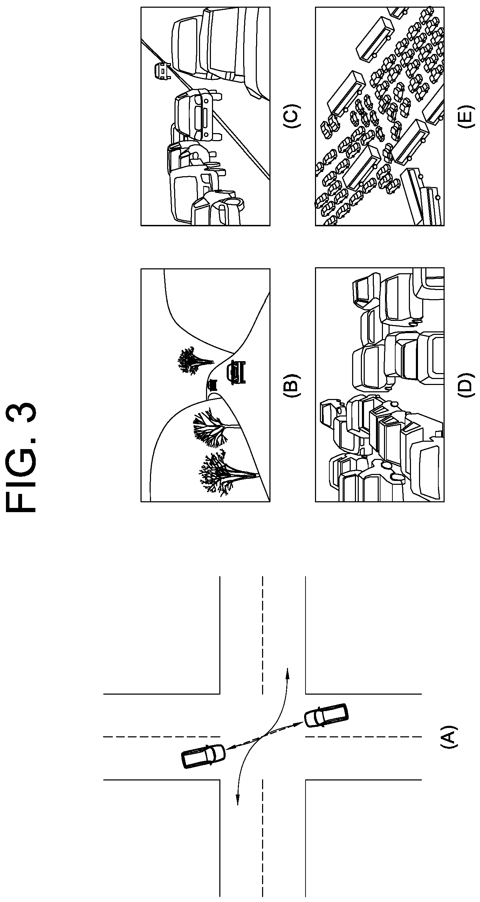

As one example, by referring to Fig. 3, a situation where the autonomous driving control device fails to establish the driving plan while on the autonomous driving mode may include at least one of (i) a situation A where an expected path of the autonomous vehicle collides with that of a vehicle on an opposite side on a crossroad, (ii) a situation B where the autonomous vehicle is traveling on a roadway without lane markings, (iii) a situation C where the autonomous vehicle must travel in violation of the lane markings, and (iv) situations D and E where at least one movement of at least one nearby vehicle fails to be estimated due to traffic congestion, but the scope of the present disclosure is not limited thereto, and may include various situations where the driving plan is difficult to be acquired according to analysis of the driving environment.

Herein, in the situation A where the expected path of the autonomous vehicle collides with that of the vehicle on the opposite side on the crossroad, for example, if the autonomous vehicle intends to turn left on the crossroad without a traffic signal and if the vehicle in an opposite lane intends to turn left, then the autonomous driving control device may fail to establish the driving plan to be used for setting a driving path of the autonomous vehicle.

Also, in the situation B where the autonomous vehicle is traveling on the roadway without the lane markings, for example, if the autonomous vehicle on the autonomous driving mode is traveling on the roadway without the lane markings or in a parking lot without the lane markings, the autonomous driving control device may fail to establish the driving plan due to a lack of detected lane markings.

And, in the situation C where the autonomous vehicle must travel in violation of the lane markings, for example, if the autonomous vehicle must travel in violation of the lane markings due to illegally parked vehicles or road construction, the autonomous driving control device may fail to establish the driving plan due to a difficulty in selecting driving lanes on the roadway.

Also, in the situations D and E where the movement of the nearby vehicle fails to be estimated due to the traffic congestion, for example, if the driving environment such as the lane markings cannot be detected or if movements of other vehicles are difficult to confirm due to the traffic congestion, the autonomous driving control device may fail to establish the driving plan due to a difficulty in selecting the driving lanes on the roadway.

In addition, the autonomous driving control device may fail to change from the autonomous driving mode to the manual driving mode if the driving environment includes a situation where the driver of the autonomous vehicle is unavailable for driving the autonomous vehicle.

As one example, accidents can occur in a circumstance, where the driver cannot drive the autonomous vehicle, e.g., the driver is unconscious, but the driving mode of the autonomous vehicle is switched from the autonomous driving mode to the manual driving mode due to a satisfaction of a condition for a change of the driving mode.

Next, if the autonomous driving control device fails to establish the driving plan while on the autonomous driving mode or fails to change from the autonomous driving mode to the manual driving mode, the autonomous driving control device 100 may allow the autonomous vehicle to be driven on a remote control mode at a step of S40.

That is, while the autonomous vehicle is traveling on the autonomous driving mode, even if the driving environment does not require the driving mode to be changed from the autonomous driving mode to the manual driving mode, in a situation where the autonomous driving control device fails to establish the driving plan or a traffic accident may happen if the autonomous driving mode is changed to the manual driving mode, the autonomous driving control device 100 may perform a process of selecting a remote control mode and thus transmitting request information for remote control to a remote control service providing server over wireless communication, to thereby allow a remote driver to remotely control the autonomous vehicle by using a specific remote vehicle corresponding to the remote control service providing server.

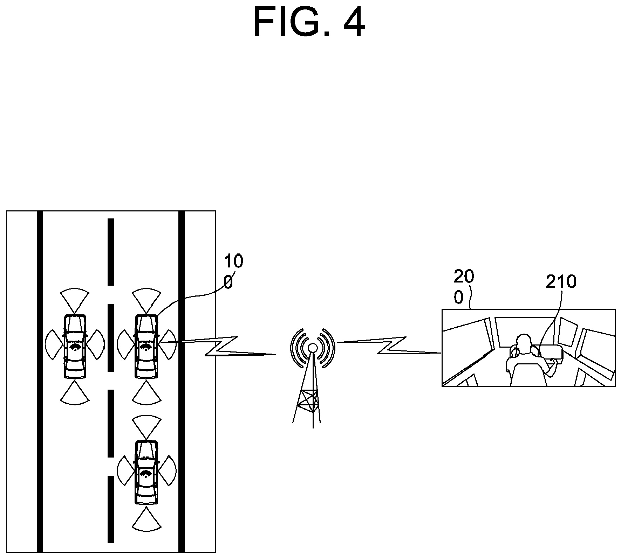

As one example, by referring to Fig. 4, the autonomous driving control device 100 may perform a process of transmitting the request information for the remote control to the remote control service providing server, to thereby allow the remote control service providing server to confirm the specific remote vehicle 200, selectable by the remote control service providing server, which is available among pre-registered remote vehicles. Herein, criteria by which the remote control service providing server selects the specific remote vehicle 200 may include at least one of (i) selecting an available remote vehicle, that is waiting to be used for the remote control of another vehicle, among multiple remote vehicles, (ii) selecting an available remote vehicle next in line according to a preset order, and (iii) selecting an available remote vehicle near the autonomous vehicle, but the scope of the present disclosure is not limited thereto.

Herein, the specific remote vehicle 200 may allow a remote driver 210 to control the autonomous vehicle according to the displayed driving environment without actual driving on the road. As one example, the specific remote vehicle 200 may be a driving simulator, but the scope of the present disclosure is not limited thereto.

And, if approval information for the remote control is acquired from the remote control service providing server or the specific remote vehicle 200, the autonomous driving control device 100 may perform a process of transmitting the sensor information to the specific remote vehicle 200 over the wireless communication, to thereby allow the specific remote vehicle 200 to be synchronized with the autonomous vehicle.

Herein, the wireless communication may include V2V communication, V2X communication, etc. using various wireless communication technology such as LTE, 5G, etc.

Also, the autonomous driving control device 100 may perform a process of displaying at least one surroundings video image of the autonomous vehicle created from analysis of the sensor information detected by the autonomous vehicle, such that the surroundings video image is synchronized with at least one display of the specific remote vehicle 200. And, in addition, the autonomous driving control device 100 may perform a process of transmitting information on a destination and a driving route of the autonomous vehicle to the specific remote vehicle 200, to thereby allow the specific remote vehicle 200 to display the information on the destination and the driving route of the autonomous vehicle for the remote driver 210 to be aware of the information on the destination and the driving route.

Thereafter, if at least one remote driving control signal is acquired which is to be used by the remote driver 210 for controlling the specific remote vehicle 200 by referring to the sensor information, the autonomous driving control device 100 may perform a process of allowing the autonomous vehicle to be driven according to the remote driving control signal.

That is, the remote driver 210 may confirm video information on front/rear/sides of the autonomous vehicle required for driving the autonomous vehicle via the display, may perform operations for driving, i.e., turning a steering wheel, stepping on and off of a brake and an acceleration pedals, turning on and off signal lamps, etc., using the specific remote vehicle 200 corresponding to the autonomous vehicle. And the autonomous driving control device 100 may receive driving control signals of the specific remote vehicle 200 controlled by the remote driver 210, to thereby allow the autonomous vehicle to be driven according to each of the driving control signals.

Meanwhile, the driver of the autonomous vehicle may select the remote control mode, to thereby allow the autonomous vehicle to be remotely controlled.

That is, if at least one selection signal, representing the driver in the autonomous vehicle selects the remote control mode , is acquired in a situation where the driver is inexperienced or not able to drive the autonomous vehicle at a step of S35, then the autonomous driving control device 100 may perform a process of transmitting the request information for the remote control to the remote control service providing server over the wireless communication, to thereby allow the remote driver 210 to remotely control the autonomous vehicle by using the specific remote vehicle 200 corresponding to the remote control service providing server, and thus to allow the autonomous vehicle to be driven on the remote control mode at a step of S40.

Meanwhile, the autonomous driving control device 100 is described above as determining whether to remotely control the autonomous vehicle, however, as another example, the sensor information of the autonomous vehicle may be transmitted to the remote control service providing server, to thereby allow the remote control service providing server to determine whether to remotely control the autonomous vehicle and thus to allow the autonomous vehicle to be driven on the remote control mode.

As described above, the present disclosure, if the driving environment detected during operation of the autonomous vehicle is determined as the situation where the autonomous driving is difficult or a decision on whether to switch the driving mode is difficult, or if a request from the driver for the remote control mode is acquired, provides a semi-autonomous driving mode allowing the autonomous vehicle to be remotely driven by the remote driver, who is hazardous-situation aware, by referring to the sensor information detected and transmitted from the autonomous vehicle over low latency network communication of 5G-enabled applications.

The present disclosure has an effect of allowing the autonomous vehicle to be driven safely even in the driving environment where the autonomous vehicle has a difficulty in determining the driving plan to be used for the autonomous driving, by allowing the remote driver to drive the autonomous vehicle.

The present disclosure has another effect of preventing traffic accidents that may occur due to an inexperienced driver of the autonomous vehicle by allowing the remote driver to drive the autonomous vehicle.

The embodiments of the present disclosure as explained above can be implemented in a form of executable program command through a variety of computer means recordable to computer readable media. The computer readable media may include solely or in combination, program commands, data files, and data structures. The program commands recorded to the media may be components specially designed for the present disclosure or may be usable to those skilled in the art. Computer readable media include magnetic media such as hard disk, floppy disk, and magnetic tape, optical media such as CD-ROM and DVD, magneto-optical media such as floptical disk and hardware devices such as ROM, RAM, and flash memory specially designed to store and carry out program commands. Program commands include not only a machine language code made by a complier but also a high level code that can be used by an interpreter etc., which is executed by a computer. The aforementioned hardware device can work as more than a software module to perform the action of the present disclosure and vice versa.

As seen above, the present disclosure has been explained by specific matters such as detailed components, limited embodiments, and drawings. They have been provided only to help more general understanding of the present disclosure. It, however, will be understood by those skilled in the art that various changes and modification may be made from the description without departing from the spirit and scope of the disclosure as defined in the following claims.

Accordingly, the thought of the present disclosure must not be confined to the explained embodiments, and the following patent claims as well as everything including variations equal or equivalent to the patent claims pertain to the category of the thought of the present disclosure.

## Claims

1. A method for remotely controlling at least one autonomous vehicle, comprising steps of:
(a) on condition that an autonomous driving control device detects driving environment of the autonomous vehicle by referring to sensor information acquired from one or more sensors of the autonomous vehicle and allows the autonomous vehicle to travel on an autonomous driving mode or on a manual driving mode according to the driving environment, the autonomous driving control device performing one of a process of determining whether the autonomous driving control device fails to establish a driving plan by using the driving environment while on the autonomous driving mode and a process of determining whether the autonomous driving control device fails to change from the autonomous driving mode to the manual driving mode by using the driving environment; and
(b) the autonomous driving control device, if the autonomous driving control device fails to establish the driving plan while on the autonomous driving mode or fails to change from the autonomous driving mode to the manual driving mode, performing a process of selecting a remote control mode and thus transmitting request information for remote control to a remote control service providing server over wireless communication, to thereby allow a remote driver to remotely control the autonomous vehicle by using a specific remote vehicle corresponding to the remote control service providing server.

2. The method of Claim 1, wherein, at the step of (b), the autonomous driving control device performs (i) a process of transmitting the request information for the remote control to the remote control service providing server, to thereby allow the remote control service providing server to confirm the specific remote vehicle which is available among pre-registered remote vehicles, (ii) if approval information for the remote control is acquired from the remote control service providing server or the specific remote vehicle, a process of transmitting the sensor information to the specific remote vehicle over the wireless communication, to thereby allow the specific remote vehicle to be synchronized with the autonomous vehicle, and (iii) if at least one remote driving control signal is acquired which is to be used by the remote driver for controlling the specific remote vehicle by referring to the sensor information, a process of allowing the autonomous vehicle to be driven according to the remote driving control signal.

3. The method of Claim 2, wherein the autonomous driving control device, while the process of transmitting the sensor information to the specific remote vehicle is performed to make the specific remote vehicle be synchronized with the autonomous vehicle, performs a process of displaying at least one surroundings video image of the autonomous vehicle created from analysis of the sensor information by the autonomous driving control device, such that the surroundings video image is synchronized with at least one display of the specific remote vehicle.

4. The method of Claim 3, wherein the autonomous driving control device performs a process of transmitting information on a destination and a driving route of the autonomous vehicle to the specific remote vehicle, to thereby allow the specific remote vehicle to display the information on the destination and the driving route of the autonomous vehicle for the remote driver to be aware of the information on the destination and the driving route.

5. The method of Claim 2, wherein the sensor information includes at least part of camera sensor information, LiDAR sensor information, radar sensor information, and ultrasound sensor information, acquired from one or more sensors installed on the autonomous vehicle.

6. The method of Claim 1, wherein the autonomous driving control device is determined as failing to establish the driving plan by using the driving environment while on the autonomous driving mode, if the driving environment corresponds to a situation including at least one of (i) a situation where an expected path of the autonomous vehicle collides with that of a vehicle on an opposite side on a crossroad, (ii) a situation where the autonomous vehicle is traveling on a roadway without lane markings, (iii) a situation where the autonomous vehicle must travel in violation of the lane markings, and (iv) a situation where at least one movement of at least one nearby vehicle fails to be estimated due to traffic congestion.

7. The method of Claim 1, wherein the autonomous driving control device is determined as failing to change from the autonomous driving mode to the manual driving mode if the driving environment includes a situation where a driver in the autonomous vehicle is unavailable for driving the autonomous vehicle.

8. The method of Claim 1, wherein, if at least one selection signal, representing a driver in the autonomous vehicle selects the remote control mode, is acquired, the autonomous driving control device performs a process of transmitting the request information for the remote control to the remote control service providing server over the wireless communication, to thereby allow the remote driver to remotely control the autonomous vehicle by using the specific remote vehicle corresponding to the remote control service providing server.

9. An autonomous driving control device for remotely controlling at least one autonomous vehicle, comprising:
at least one memory that stores instructions; and
at least one processor configured to execute the instructions to perform or support another device to perform: (I) on condition that the autonomous driving control device detects driving environment of the autonomous vehicle by referring to sensor information acquired from one or more sensors of the autonomous vehicle and allows the autonomous vehicle to travel on an autonomous driving mode or on a manual driving mode according to the driving environment, one of a process of determining whether the autonomous driving control device fails to establish a driving plan by using the driving environment while on the autonomous driving mode and a process of determining whether the autonomous driving control device fails to change from the autonomous driving mode to the manual driving mode by using the driving environment and (II) if the autonomous driving control device fails to establish the driving plan while on the autonomous driving mode or fails to change from the autonomous driving mode to the manual driving mode, a process of selecting a remote control mode and thus transmitting request information for remote control to a remote control service providing server over wireless communication, to thereby allow a remote driver to remotely control the autonomous vehicle by using a specific remote vehicle corresponding to the remote control service providing server.

10. The autonomous driving control device of Claim 9, wherein, at the process of (II), the processor performs (i) a process of transmitting the request information for the remote control to the remote control service providing server, to thereby allow the remote control service providing server to confirm the specific remote vehicle which is available among pre-registered remote vehicles, (ii) if approval information for the remote control is acquired from the remote control service providing server or the specific remote vehicle, a process of transmitting the sensor information to the specific remote vehicle over the wireless communication, to thereby allow the specific remote vehicle to be synchronized with the autonomous vehicle, and (iii) if at least one remote driving control signal is acquired which is to be used by the remote driver for controlling the specific remote vehicle by referring to the sensor information, a process of allowing the autonomous vehicle to be driven according to the remote driving control signal.

11. The autonomous driving control device of Claim 10, wherein, while the process of transmitting the sensor information to the specific remote vehicle is performed to make the specific remote vehicle be synchronized with the autonomous vehicle, the processor performs a process of displaying at least one surroundings video image of the autonomous vehicle created from analysis of the sensor information by the autonomous driving control device, such that the surroundings video image is synchronized with at least one display of the specific remote vehicle.

12. The autonomous driving control device of Claim 11, wherein the processor performs a process of transmitting information on a destination and a driving route of the autonomous vehicle to the specific remote vehicle, to thereby allow the specific remote vehicle to display the information on the destination and the driving route of the autonomous vehicle for the remote driver to be aware of the information on the destination and the driving route.

13. The autonomous driving control device of Claim 10, wherein the sensor information includes at least part of camera sensor information, LiDAR sensor information, radar sensor information, and ultrasound sensor information, acquired from one or more sensors installed on the autonomous vehicle.

14. The autonomous driving control device of Claim 9, wherein the processor is determined as failing to establish the driving plan by using the driving environment while on the autonomous driving mode, if the driving environment corresponds to a situation including at least one of (i) a situation where an expected path of the autonomous vehicle collides with that of a vehicle on an opposite side on a crossroad, (ii) a situation where the autonomous vehicle is traveling on a roadway without lane markings, (iii) a situation where the autonomous vehicle must travel in violation of the lane markings, and (iv) a situation where at least one movement of at least one nearby vehicle fails to be estimated due to traffic congestion.

15. The autonomous driving control device of Claim 9, wherein, if at least one selection signal, representing a driver in the autonomous vehicle selects the remote control mode, is acquired, the processor performs a process of transmitting the request information for the remote control to the remote control service providing server over the wireless communication, to thereby allow the remote driver to remotely control the autonomous vehicle by using the specific remote vehicle corresponding to the remote control service providing server.
